# EUROPÄISCHE PATENTANMELDUNG

(11) **EP 4 559 743 A1**
(43) Veröffentlichungstag der Anmeldung: **28.05.2025**
(21) Anmeldenummer: 23212360.4
(22) Anmeldetag: 27.11.2023
(51) Int. Cl.: B60N 2/02, B60N 2/06

(54) **FAHRZEUGSITZ MIT EINER LÄNGSVERSTELLEINRICHTUNG**

(71) Anmelder: Adient US LLC, Plymouth, MI 48170 (US)
(72) Erfinder: QUAST, Ingo, 40477 Duesseldorf (DE); SPRENGER, Erik, 42929 Wermelskirchen (DE); ZALAVARI, Kornel, 42659 Solingen (DE); MAYER, Thomas, 42477 Radevormwald (DE)
(74) Vertreter: Liedtke & Partner Patentanwälte

(57) **Zusammenfassung**

Die Erfindung betrifft einen Fahrzeugsitz (100) in Kombination mit einer Längsverstel-Ieinrichtung (110), die eine Schienenanordnung (112) mit einer festen Unterschiene (116) und einer zur Unterschiene (116) verstellbaren Oberschiene (114) umfasst, wobei der Fahrzeugsitz (100) mindestens ein durch eine Antriebseinheit (120) antreibbares Antriebsrad (124) umfasst, das eingerichtet ist, in einem eingebauten Zustand des Fahrzeugsitzes (100) auf einer dem Antriebsrad (124) zugewandten Reibfläche (126) der Unterschiene (116) abzurollen und die Oberschiene (114) relativ zu der Unterschiene (116) zu verstellen, wobei mindestens ein Sperrmechanismus (130) vorgesehen und eingerichtet ist, die Antriebseinheit (120) in einem ausgebauten Zustand des Fahrzeugsitzes (100) in einer angehobenen Position (200) zumindest zu halten und optional zu sperren.

## Beschreibung

Die Erfindung betrifft einen Fahrzeugsitz mit einer Längsverstelleinrichtung.

### Stand der Technik

Eine Längsverstelleinrichtung für einen Fahrzeugsitz umfasst im Allgemeinen zwei im Abstand voneinander angeordnete Schienenpaare, die jeweils aus zwei Schienen, einer dem Sitz zugeordneten Oberschiene und einer dem Boden eines Fahrzeugs zugeordneten Unterschiene, aufgebaut sind. Die Längsverstelleinrichtung umfasst darüber hinaus wenigstens ein federbelastetes, bewegbares Verriegelungsteil, das an der Oberschiene gehaltert ist und in einer Verriegelungsstellung eine Bewegung der Oberschiene in der Unterschiene sperrt. Dabei kann die Unterschiene Durchbrüche aufweisen, während die Oberschiene mit Öffnungen versehen ist und das Verriegelungsteil an seinen beiden gegenüberliegenden Längsseiten Vorsprünge trägt, die in der Verriegelungsstellung durch eine Feder sowohl in die Öffnungen, als auch in die Durchbrüche bewegbar sind. Eine derartige Längsverstelleinrichtung ist beispielsweise aus dem Europäischen Patent EP 1 227 950 B1 bekannt.

### Aufgabe

Der Erfindung liegt die Aufgabe zu Grunde, einen Fahrzeugsitz der eingangs genannten Art zu verbessern, insbesondere einen hinsichtlich eines Einbaus und Ausbaus aus dem Fahrzeug verbesserten Fahrzeugsitz bereitzustellen.

### Lösung

Diese Aufgabe wird erfindungsgemäß gelöst durch einen Fahrzeugsitz mit den Merkmalen des Anspruchs 1.

Der erfindungsgemäße Fahrzeugsitz umfasst in Kombination mit einer Längsverstelleinrichtung mit zumindest einer Schienenanordnung mit einer festen Unterschiene und einer zur Unterschiene verstellbaren Oberschiene mindestens ein durch eine Antriebseinheit antreibbares Antriebsrad, das eingerichtet ist, in einem eingebauten Zustand des Fahrzeugsitzes auf einer dem Antriebsrad zugewandten Reibfläche der Unterschiene abzurollen und die Oberschiene relativ zu der Unterschiene zu verstellen, wobei mindestens ein Sperrmechanismus vorgesehen und eingerichtet ist, die Antriebseinheit in einem ausgebauten Zustand des Fahrzeugsitzes in einer angehobenen Position zumindest zu halten, insbesondere gesichert, zum Beispiel kraftgesichert zu halten, und optional zu sperren.

Unter einem eingebauten Zustand des Fahrzeugsitzes wird im Sinne der Erfindung verstanden, dass der Fahrzeugsitz an der Schienenanordnung, insbesondere an dessen Oberschiene, zum Beispiel mittels eines Befestigungsmoduls mit Verriegelungshaken (auch Easy-Mount-Modul mit Befestigungsklauen genannt), gekoppelt, insbesondere verriegelt befestigt ist.

Unter einem ausgebauten Zustand des Fahrzeugsitzes wird im Sinne der Erfindung verstanden, dass der Fahrzeugsitz von der Schienenanordnung, insbesondere von dessen Oberschiene, zum Beispiel mittels eines Befestigungsmoduls mit gelösten Verriegelungshaken (auch Easy-Mount-Modul genannt), entkoppelt, insbesondere entriegelt und gelöst, insbesondere ausgebaut oder angehoben, ist.

Dadurch, dass die Antriebseinheit im ausgebauten Zustand des Fahrzeugsitzes in einer angehobenen Position gesichert gehalten oder gesichert haltbar und optional gesperrt oder sperrbar ist, ist die Antriebseinheit gegen ein unbeabsichtigtes Absenken, zum Beispiel in Folge von einer äußeren Beanspruchung, beispielsweise durch Bewegungen, Vibrationen, Stöße, Absenkung durch Eigengewicht oder dergleichen, geschützt.

Vorteilhafte Ausgestaltungen, welche einzeln oder in Kombination miteinander eingesetzt werden können, sind Gegenstand der Unteransprüche.

Insbesondere kann der Sperrmechanismus durch einen Kraftfluss über eine erste Kopplung eines, insbesondere im ausgebauten Zustand angehobenen und verriegelten, Steckermoduls, das insbesondere zur elektrischen Verbindung des Fahrzeugsitzes vorgesehen ist, mit einem Steuermodul und eine zweite Kopplung dieses Steuermoduls mit der Antriebseinheit gebildet sein. Durch einen solchen Kraftfluss über mehrere Komponenten, insbesondere vom Steckermodul über das Steuermodul zur Antriebseinheit über indirekte und/oder direkte Kopplungen, verteilen sich die Kräfte und sorgen für eine sichere Sperrkraft und somit ein sicheres, insbesondere kraftgesichertes, Halten der Antriebseinheit in der angehobenen Position im ausgebauten Zustand des Fahrzeugsitzes und ein sicheres Verhindern oder Sperren eines ungewünschten Absenkens der Antriebseinheit.

Insbesondere kann das Steckermodul während eines Ausbaus des Fahrzeugsitzes oder im ausgebauten Zustand des Fahrzeugsitzes in eine angehobene Position bringbar und in dieser verriegelbar beziehungsweise verriegelt sein. Beispielsweise kann das Steckermodul durch eine Kraftbeaufschlagung durch das Befestigungsmodul in die angehobene Position gebracht und dort verriegelt werden. Dadurch ist sichergestellt, dass das Steckermodul im ausgebauten Zustand in der angehobenen Position, welche eine eingefahrene Position ist, gegenüber einer äußeren Beanspruchung geschützt angeordnet ist. Das Steckermodul am Fahrzeugsitz kann insbesondere als ein Stecker oder eine Steckerbuchse ausgebildet sein. Das Steckermodul kann korrespondierend zu einer Steckerbuchse beziehungsweise einem Stecker an der Schienenanordnung, insbesondere an der Oberschiene, ausgebildet sein.

Beispielsweise kann die erste Kopplung durch eine formschlüssige und/oder kraftschlüssige Verbindung von Steckermodul und Steuermodul gebildet sein. Insbesondere können das Steckermodul und das Steuermodul zueinander korrespondierende Kopplungsmittel aufweisen, welche auf Mitnahme miteinander gekoppelt oder koppelbar sind. Beispielsweise kann die erste Kopplung als eine Steckverbindung, Rastverbindung, Pin-Slot-Verbindung oder dergleichen ausgebildet sein.

Beispielsweise kann das Steuermodul eine Kopplungsausnehmung, insbesondere eine Durchgangsöffnung, eine Steckaufnahme, eine Rastaufnahme oder dergleichen, umfassen, über welche das Steuermodul mit dem Steckermodul auf Mitnahme gekoppelt ist oder koppelbar ist. Das Steckermodul kann beispielsweise einen Kopplungsvorsprung, insbesondere eine Mitnahmevorsprung, eine Nase, einen Pin oder dergleichen, umfassen, über welchen das Steckermodul mit dem Steuermodul auf Mitnahme gekoppelt ist oder koppelbar ist. Insbesondere kann die erste Kopplung durch einen oder durch den Kopplungsvorsprung, der in eine oder in die Kopplungsausnehmung eingreift, gebildet sein.

Darüber hinaus können die Antriebseinheit und das Steuermodul über die zweite Kopplung auf Mitnahme miteinander gekoppelt oder koppelbar sein. Beispielsweise kann im ausgebauten Zustand des Fahrzeugsitzes die Antriebseinheit durch die zweite Kopplung, insbesondere im Kraftfluss, in die angehobene Position gestellt und in der angehobenen Position gehalten oder haltbar sein und optional gegen ein Absenken gesperrt sein.

Beispielsweise kann die zweite Kopplung als ein festes Koppelelement ausgebildet sein. Insbesondere kann die zweite Kopplung einerseits an dem Steuermodul, insbesondere einer Wippe oder einem Steuerhebel, und andererseits an der Antriebseinheit angelenkt sein. Zum Beispiel kann die zweite Kopplung an einem Exzenter der Antriebseinheit angelenkt sein. In einem möglichen Beispiel kann die zweite Kopplung als eine Zugkopplung und/oder Druckkopplung ausgebildet sein. Insbesondere kann die zweite Kopplung als eine Zugstange und/oder Druckstange ausgebildet sein.

Zusammenfassend und mit anderen Worten ausgedrückt ist durch die Erfindung ein einbaubarer und ausbaubarer Fahrzeugsitz bereitgestellt, der an einer im Fahrzeug angeordneten Längsverstelleinrichtung koppelbar ist und dessen Antriebsrad durch den Sperrmechanismus gegen ein unbeabsichtigtes Absenken gegen Einflüsse von außen, wie zum Beispiel Bewegungen, Vibrationen, Stöße, Absenkung durch Eigengewicht oder dergleichen, gesichert werden kann.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung nach dem Stand der Technik,
- Fig. 2:: eine Draufsicht auf eine Antriebseinheit außer Eingriff von der Längsverstelleinrichtung,
- Fig. 3:: eine Draufsicht auf die Antriebseinheit im Eingriff mit der Längsverstelleinrichtung,
- Fig. 4:: in perspektivischer Darstellung einen Sperrmechanismus für die Antriebseinheit zum Sperren deren angehobener Position im ausgebauten Zustand durch eine Kraftflusskette,
- Fig. 5:: in Draufsicht die Kraftflusskette des Sperrmechanismus gemäß Figur 4, und
- Fig. 6: in Explosionsdarstellung ein Steckermodul und ein Steuermodul und deren Kopplung in der Kraftflusskette.

Einander entsprechende Teile sind in allen Figuren mit den gleichen Bezugszeichen versehen.

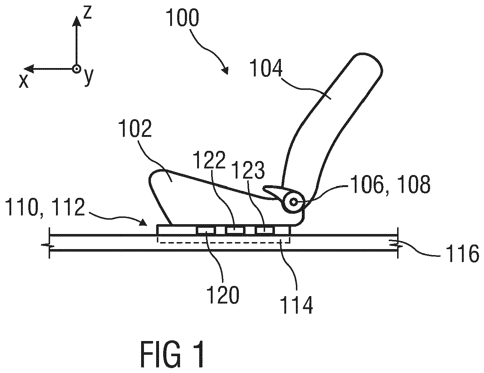

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Insbesondere kann die Längsverstelleinrichtung 110 Teil eines Fahrzeugs sein und der Fahrzeugsitz 100 an dieser Längsverstelleinrichtung 110 lösbar befestigbar sein.

Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeuges verbunden.

Der Fahrzeugsitz 100 kann eine Antriebseinheit 120 umfassen, die eingerichtet ist, die Oberschiene 114 relativ zur Unterschiene 116 zu verstellen.

Des Weiteren kann der Fahrzeugsitz 100 ein Steuermodul 122, das zur Montage (auch Einbau genannt) oder Demontage (auch Ausbau genannt) des Fahrzeugsitzes 100 an der Längsverstelleinrichtung 110 ausgebildet ist, und ein Steckermodul 123 zur elektrischen Verbindung umfassen.

Je Fahrzeugsitz 100 ist mindestens eine Antriebseinheit 120 und ein Steuermodul 122 vorgesehen. Auch können je Schienenpaar jeweils eine Antriebseinheit 120 und ein Steuermodul 122 und somit je Fahrzeugsitz 100 bei zwei Schienenpaaren zwei Antriebseinheiten 120 und zwei Steuermodule 122 vorgesehen sein.

Nachfolgend wird die Erfindung an einer Antriebseinheit 120 und einem Steuermodul 122 näher beschrieben.

Das Steuermodul 122 (auch Easy-Mount-Modul genannt) ist zur Montage oder Demontage des Fahrzeugsitzes 100 an der Längsverstelleinrichtung 110 eingerichtet und ist hierzu beispielsweise mit den Befestigungen 118 zum Entriegeln oder Verriegeln dieser an der Oberschiene 114 gekoppelt.

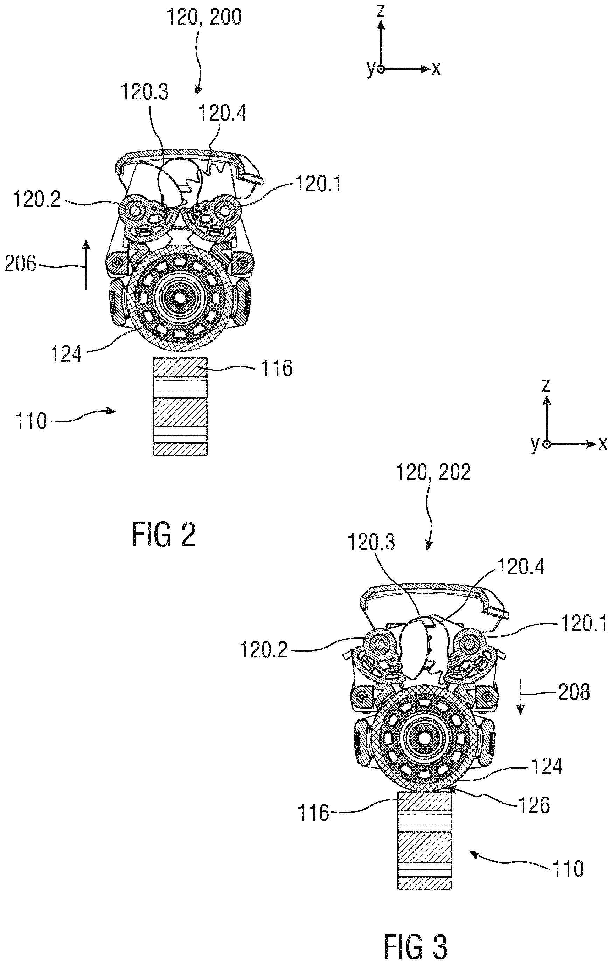

Das Steuermodul 122 ist zusätzlich eingerichtet, die Antriebseinheit 120 in eine angehobene Position 200 (dargestellt in Figur 2) oder in eine abgesenkte Position 202 (dargestellt in Figur 3) zu bringen.

Figur 2 zeigt eine Draufsicht auf die Antriebseinheit 120 außer Eingriff von der Längsverstelleinrichtung 110 und somit in der angehobenen Position 200.

Mittels des Steuermoduls 122 ist die Antriebseinheit 120 in verschiedene Positionen stellbar. Zum Beispiel kann die Antriebseinheit 120 bei einer Montage des Fahrzeugsitzes 100 an der Längsverstelleinrichtung 110 in eine Verstellbereitschaft in die abgesenkte Position 202 und bei einer Demontage des Fahrzeugsitzes 100 von der Längsverstelleinrichtung 110 in die angehobene Position 200, eine sichere Position, insbesondere eine Parkposition oder Ruheposition, gestellt werden.

Beispielsweise ist das Steuermodul 122 eingerichtet, die Antriebseinheit 120 in die abgesenkte Position 202 und damit in Antriebseingriff mit der Längsverstelleinrichtung 110 zu bringen.

Hierzu können das Steuermodul 122 und die Antriebseinheit 120 miteinander bewegungsgekoppelt sein. Insbesondere sind das Steuermodul 122 und die Antriebseinheit 120 derart miteinander gekoppelt, dass bei einer Montage des Fahrzeugsitzes 100 an der Längsverstelleinrichtung 110, insbesondere an der Oberschiene 114, ein in Richtung der Längsverstelleinrichtung 110 wirkendes Drehmoment (nicht dargestellt) am Steuermodul 122 über dieses Steuermodul 122 auf die Antriebseinheit 120 wirkt, so dass diese in die abgesenkte Position 202 (dargestellt in Figur 3) auf die Längsverstelleinrichtung 110, insbesondere auf die Unterschiene 116, stellbar oder gestellt ist.

Hierdurch kommt ein Antriebsrad 124, insbesondere ein Antriebsreibrad, in Kontakt mit der Unterschiene 116, insbesondere einer Reibfläche 126. Dadurch wird die Antriebseinheit 120, insbesondere das Antriebsrad 124, in Eingriff, beispielsweise in einen Reibeingriff, mit der Längsverstelleinrichtung 110, insbesondere der Unterschiene 116, gebracht, um die Oberschiene 114 relativ zur Unterschiene 116 zu verstellen.

Die Antriebseinheit 120 kann als eine separate Einheit oder ein separates Modul ausgebildet sein. Das Steuermodul 122 kann als separate Montageeinheit ausgebildet sein. Das Steckermodul 123 kann als separate elektrische Steckeinheit mit Steckkontakten ausgebildet sein.

Die Antriebseinheit 120 kann beispielsweise zwei Exzenter 120.1 und 120.2 umfassen. Zwischen den beiden Exzentern 120.1 und 120.2 kann ein Federelement 120.3, insbesondere eine Flip-Flop-Feder oder bistabile Feder oder dergleichen, angeordnet sein.

Das Federelement 120.3 ist als eine bistabile Feder mit zwei stabilen Endlagen ausgebildet, welche oberhalb und unterhalb einer Totpunktlage bei unterschiedlichem Drehsinn der Exzenter 120.1, 120.2 sind. Die Exzenter 120.1 und 120.2 sind direkt miteinander gekoppelt, zum Beispiel über eine Getriebeeinheit 120.4, insbesondere eine Stirnradgeradverzahnung eines Zahnradgetriebes.

Oberhalb der Totpunktlage des Federelements 120.3 hält dieses zwischen den beiden Exzentern 120.1, 120.2 angeordnete Federelement 120.3 über die beiden Exzenter 120.1, 120.2 die Antriebseinheit 120 angehoben, wie durch Pfeil 206 dargestellt. Unterhalb der Totpunktlage wird die Antriebseinheit 120, insbesondere das als Reibrad ausgebildete Antriebsrad 124, über das als Flip-Flop-Feder ausgebildete Federelement 120.3 gegen die Unterschiene 116 gemäß Pfeil 208 (dargestellt in Figur 3) gedrückt.

Figur 3 zeigt eine Draufsicht auf die Antriebseinheit 120 im Eingriff mit der Längsverstelleinrichtung 110 und somit in der abgesenkten Position 202, in welcher das Antriebsrad 124 im Reibeingriff an einer optionalen Reibfläche 126 der Unterschiene 116 ist.

Die beiden Exzenter 120.1 und 120.2 werden mittels des Federelements 120.3 in eine stabile Endlage gedrückt, in welcher diese das Antriebsrad 124 gegen die Reibfläche 126 drücken.

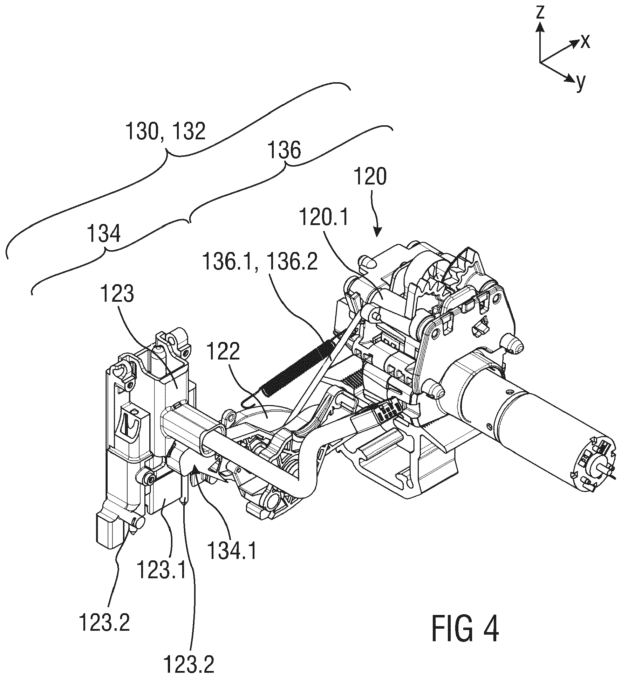

Figur 4 zeigt in perspektivischer Darstellung einen Sperrmechanismus 130 für die Antriebseinheit 120 zum Sperren deren angehobener Position 200 im ausgebauten Zustand des Fahrzeugsitzes 100 durch eine Kraftflusskette 132.

Der Sperrmechanismus 130 ist vorgesehen und eingerichtet, die Antriebseinheit 120 in einem ausgebauten Zustand des Fahrzeugsitzes 100 in der angehobenen Position 200 (dargestellt in Figur 2) zu sperren.

Unter einem eingebauten Zustand des Fahrzeugsitzes 100 wird verstanden, dass der Fahrzeugsitz 100 an der Schienenanordnung 112, insbesondere an dessen Oberschiene 114, zum Beispiel mittels eines Befestigungsmoduls mit den Befestigungen 118, zum Beispiel Verriegelungshaken (auch Easy-Mount-Modul genannt), gekoppelt, insbesondere verriegelt befestigt ist.

Unter einem ausgebauten Zustand des Fahrzeugsitzes 100 wird verstanden, dass der Fahrzeugsitz 100 von der Schienenanordnung 112, insbesondere von dessen Oberschiene 114 entkoppelt, insbesondere entriegelt und gelöst, ist und angehoben und ausgebaut werden kann.

Dadurch, dass die Antriebseinheit 120 im ausgebauten Zustand des Fahrzeugsitzes 100 in der angehobenen Position 200 gesperrt oder sperrbar ist, ist die Antriebseinheit 120 gegen ein unbeabsichtigtes Absenken, zum Beispiel in Folge von einer äußeren Beanspruchung, beispielsweise durch Bewegungen, Vibrationen, Stöße, Absenkung durch Eigengewicht oder dergleichen, geschützt.

Der Sperrmechanismus 130 kann durch einen Kraftfluss über eine erste Kopplung 134 des Steckermoduls 123 mit dem Steuermodul 122 und eine zweite Kopplung 136 dieses Steuermoduls 122 mit der Antriebseinheit 120 gebildet sein. Die erste Kopplung 134 und die zweite Kopplung 136 bilden die Kraftflusskette 132.

Das Steckermodul 123 ist im ausgebauten Zustand des Fahrzeugsitzes 100 in eine obere oder angehobene Stellung, insbesondere seine oberste Stellung, bewegt und in dieser verriegelt. Beispielsweise kann vor einem Einbau oder nach einem Ausbau des Fahrzeugsitzes 100 das Steckermodul 123 zunächst angehoben und vorgespannt, insbesondere mit gespannten Federmitteln (nicht dargestellt), verriegelt sein.

Das Steckermodul 123 kann insbesondere als ein Stecker oder eine Steckerbuchse ausgebildet sein. Im Beispiel ist das Steckermodul 123, das am Fahrzeugsitz 100 angeordnet ist, als ein Stecker mit elektrischen Steckkontakten 123.1 und/oder mechanischen Befestigungskontakten 123.2 ausgebildet. Das Steckermodul 123 kann korrespondierend zu einer Steckerbuchse beziehungsweise einem Stecker an der Schienenanordnung 112, insbesondere an der Oberschiene 114, ausgebildet sein (nicht näher dargestellt).

Die erste Kopplung 134 zwischen dem Steckermodul 123 und dem Steuermodul 122, insbesondere einer Wippe oder einem Steuerhebel, kann durch eine direkte Verbindung 134.1, insbesondere eine formschlüssige und/oder kraftschlüssige Verbindung, von Steckermodul 123 und Steuermodul 122 gebildet sein. Beispielsweise kann die erste Kopplung 134 als eine Steckverbindung, Rastverbindung, Pin-Slot-Verbindung oder dergleichen ausgebildet sein.

Darüber hinaus können die Antriebseinheit 120 und das Steuermodul 122 über die zweite Kopplung 136 auf Mitnahme miteinander gekoppelt sein. Beispielsweise kann im ausgebauten Zustand des Fahrzeugsitzes 100 die Antriebseinheit 120 durch die zweite Kopplung 136 in die angehobene Position 200 gestellt und in der angehobenen Position 200 gehalten oder haltbar sein und gegen ein Absenken gesperrt sein.

Beispielsweise kann die zweite Kopplung 136 hierzu als eine indirekte Kopplung 136.1 ausgebildet sein und ein zum Beispiel als eine Koppelstange oder ein Koppeldraht ausgebildetes Koppelelement 136.2 umfassen. Insbesondere kann die zweite Kopplung 136 einerseits an dem Steuermodul 122, insbesondere einer Wippe oder einem Steuerhebel, und andererseits an der Antriebseinheit 120 angelenkt sein. Zum Beispiel kann die zweite Kopplung 136 an einem der Exzenter 120.1 der Antriebseinheit 120 angelenkt sein.

Darüber hinaus kann die als indirekte Kopplung 136.1 ausgebildete zweite Kopplung 136 als eine Zugkopplung und/oder eine Druckkopplung ausgebildet sein. Insbesondere kann die zweite Kopplung 136 als eine Zugstange und/oder eine Druckstange ausgebildet sein. Zum Anheben der Antriebseinheit 120 ist die zweite Kopplung 136 als eine Zugkopplung eingerichtet.

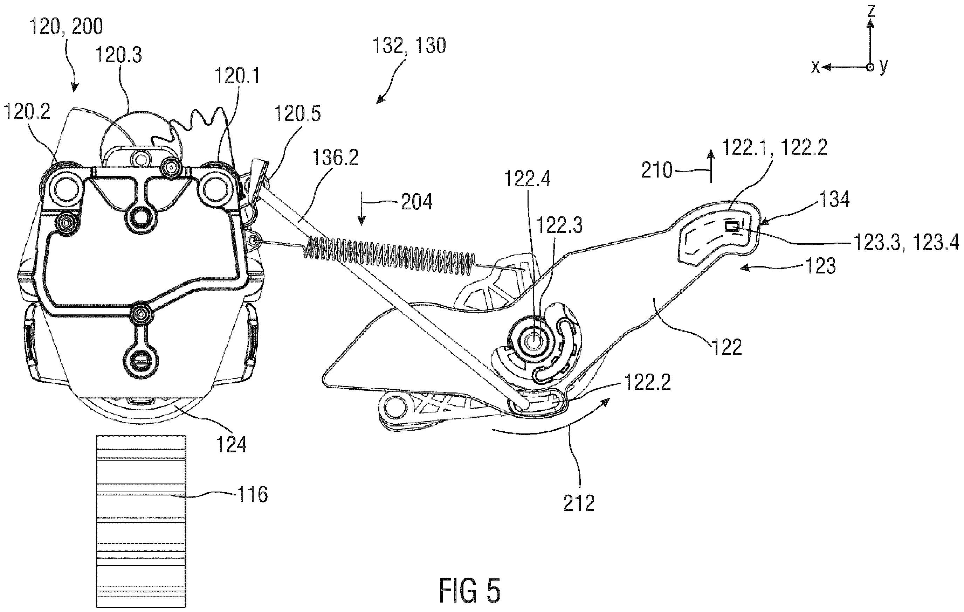

Figur 5 zeigt in Draufsicht die Kraftflusskette 132 des Sperrmechanismus 130 gemäß Figur 4.

Bei der Entnahme oder beim Ausbau des Fahrzeugsitzes 100 wird das beispielsweise als eine Wippe oder ein Hebel ausgebildete Steuermodul 122 durch das Steckermodul 123, welches gemäß Pfeil 210 in eine obere, insbesondere eine oberste Stellung, gebracht und in dieser verriegelt ist, über die erste Kopplung 134 gehalten, insbesondere gemäß Pfeil 204 in einer niedergedrückten Stellung gehalten. Dabei wird das Steuermodul 122 gemäß Pfeil 212 geschwenkt, wobei ein nicht näher dargestelltes Befestigungsmodul, insbesondere ein Exzenter des Befesitgungsmoduls (auch Easy Mount Modul genannt) für den Fahrzeugsitz 100, das Steuermodul 122 gemäß Pfeil 204 in Richtung der Längsverstelleinrichtung 110 niederdrückt. Dabei wird oder ist das Steckermodul 123 in eine obere, insbesondere eine oberste Stellung, gemäß Pfeil 210 angehoben und verbracht und dort verriegelt. Hiernach sorgt eine Steckerverriegelung über die Kraftflusskette 132 von dem Steckermodul 123 über das Steuermodul 122 und das Koppelelement 136.2 bis zur Antriebseinheit 120 für eine, insbesondere kraftbelastete, Sicherstellung der angehobenen Position 200 der Antriebseinheit 120 und damit für eine kraftbelastete Arretierung der angehobenen Antriebseinheit 120.

Bevorzugt ist das Steuermodul 122 in einem Gelenkpunkt 122.3 um eine Schwenkachse 122.4 schwenkbar gelagert. Insbesondere ist das Steuermodul 122 in dem Gelenkpunkt 122.3 schwenkbar gegenüber der Längsverstelleinrichtung 110 gelagert.

Durch die zweite Kopplung 136 des Steuermoduls 122 wird infolgedessen die Antriebseinheit 120 in die angehobene Position 200 gestellt und dort durch die Kraftflusskette 132 gehalten und an einem Absenken gehindert, so dass der Sperrmechanismus 130 gebildet ist.

Dabei wird das Koppelelement 136.2, das die zweite Kopplung 136 bildet, auf Zug belastet. Hierzu weist das Steuermodul 122 eine Kopplungsausnehmung 122.2 auf, in welche das Koppelelement 136.2 angelenkt ist. Am Exzenter 120.1 kann für das Koppelelement 136.2 eine Gelenkaufnahme 120.5 vorgesehen sein.

Das Steckermodul 123 und das Steuermodul 122 können zur Ausbildung der ersten Kopplung 134 zueinander korrespondierende Kopplungsmittel 123.3 und 122.1 aufweisen, welche auf Mitnahme miteinander gekoppelt oder koppelbar sind.

Beispielsweise kann das Steuermodul 122 als ein erstes Kopplungsmittel 122.1 die Kopplungsausnehmung 122.2, insbesondere eine Durchgangsöffnung, eine Steckaufnahme, eine Rastaufnahme oder dergleichen, umfassen, über welche das Steuermodul 122 mit dem Steckermodul 123 auf Mitnahme gekoppelt ist. Das Steckermodul 123 kann als zweites Kopplungsmittel 123.3 beispielsweise einen Kopplungsvorsprung 123.4, insbesondere einen Mitnahmevorsprung, eine Nase, einen Pin oder dergleichen, umfassen, über welchen das Steckermodul 123 mit dem Steuermodul 122 auf Mitnahme gekoppelt ist. Insbesondere kann die erste Kopplung 134 durch den Kopplungsvorsprung 123.4, der in die Kopplungsausnehmung 122.2 eingreift, gebildet sein.

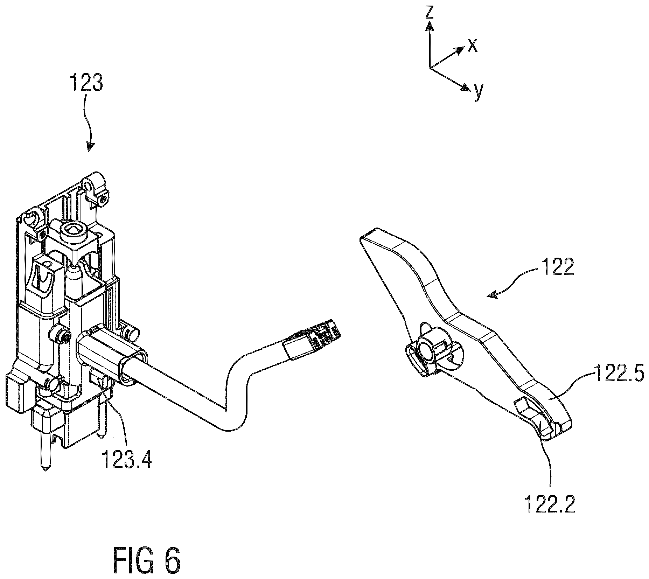

Figur 6 zeigt in Explosionsdarstellung ein Beispiel für das Steckermodul 123 und ein Beispiel für das Steuermodul 122, das als Wippe ausgebildet ist, und deren Kopplungsschnittstellen in der Kraftflusskette 132, dargestellt in Figuren 4 und 5.

Das Steuermodul 122 weist die Kopplungsausnehmung 122.2 auf. Die Kopplungsausnehmung 122.2 ist beispielsweise als eine Durchgangsöffnung oder ein Schlitz in das Steuermodul 122 an einem seiner Enden, insbesondere an einem Hebelarmende 122.5, angeordnet.

Das Steckermodul 123 weist den Kopplungsvorsprung 123.4 auf, der beispielsweise als eine Mitnahmekontur, insbesondere eine Nase, ausgebildet ist, die korrespondierend zur Kontur der Kopplungsausnehmung 122.2 ausgebildet ist, um in diese formschlüssig und/oder kraftschlüssig zu koppeln.

### Bezugszeichenliste

- 100: Fahrzeugsitz
- 102: Sitzteil
- 104: Rückenlehne
- 106: Beschlag
- 108: Drehachse
- 110: Längsverstelleinrichtung
- 112: Schienenanordnung
- 114: Erstes Schienenelement (Oberschiene)
- 116: Zweites Schienenelement (Unterschiene)
- 118: Befestigungen
- 120: Antriebseinheit
- 120.1: Exzenter
- 120.2: Exzenter
- 120.3: Federelement
- 120.4: Getriebeeinheit
- 120.5: Gelenkaufnahme
- 122: Steuermodul
- 122.1: erstes Kopplungsmittel
- 122.2: Kopplungsausnehmung
- 122.3: Gelenkpunkt
- 122.4: Schwenkachse
- 122.5: Hebelarmende
- 123: Steckermodul
- 123.1: elektrische Steckkontakte
- 123.2: mechanische Befestigungskontakte
- 123.3: zweites Kopplungsmittel
- 123.4: Kopplungsvorsprung
- 124: Antriebsrad
- 126: Reibfläche
- 130: Sperrmechanismus
- 132: Kraftflusskette
- 134: erste Kopplung
- 134.1: direkte Verbindung
- 136: zweite Kopplung
- 136.1: indirekte Kopplung
- 136.2: Koppelelement

- 200: angehobene Position
- 202: abgesenkte Position
- 204: Pfeil
- 206: Pfeil
- 208: Pfeil
- 210: Pfeil
- 212: Pfeil

- x: Längsrichtung
- y: Querrichtung
- z: Vertikalrichtung

## Patentansprüche

1. Fahrzeugsitz (100) in Kombination mit einer Längsverstelleinrichtung (110), die eine Schienenanordnung (112) mit einer festen Unterschiene (116) und einer zur Unterschiene (116) verstellbaren Oberschiene (114) umfasst,
wobei der Fahrzeugsitz (100) mindestens ein durch eine Antriebseinheit (120) antreibbares Antriebsrad (124) umfasst, das eingerichtet ist, in einem eingebauten Zustand des Fahrzeugsitzes (100) auf einer dem Antriebsrad (124) zugewandten Reibfläche (126) der Unterschiene (116) abzurollen und die Oberschiene (114) relativ zu der Unterschiene (116) zu verstellen, wobei mindestens ein Sperrmechanismus (130) vorgesehen und eingerichtet ist, die Antriebseinheit (120) in einem ausgebauten Zustand des Fahrzeugsitzes (100) in einer angehobenen Position (200) zumindest zu halten und optional zu sperren.

2. Fahrzeugsitz (100) nach Anspruch 1,
**dadurch gekennzeichnet, dass** der Sperrmechanismus (130) durch einen Kraftfluss über eine erste Kopplung (134) eines Steckermoduls (123) mit einem Steuermodul (122) und eine zweite Kopplung (136) des Steuermoduls (122) mit der Antriebseinheit (120) gebildet ist.

3. Fahrzeugsitz (100) nach Anspruch 2,
**dadurch gekennzeichnet, dass** die erste Kopplung (134) durch eine formschlüssige und/oder kraftschlüssige Verbindung von Steckermodul (123) und Steuermodul (122) gebildet ist.

4. Fahrzeugsitz (100) nach Anspruch 2 oder 3,
**dadurch gekennzeichnet, dass** das Steckermodul (123) während eines Ausbaus des Fahrzeugsitzes (100) oder im ausgebauten Zustand des Fahrzeugsitzes (100) in eine angehobene Stellung bringbar und verriegelbar beziehungsweise verriegelt ist.

5. Fahrzeugsitz (100) nach einem der Ansprüche 2 bis 4,
**dadurch gekennzeichnet, dass** das Steckermodul (123) und das Steuermodul (122) zueinander korrespondierende Kopplungsmittel (122.1, 123.3) aufweisen, welche auf Mitnahme miteinander gekoppelt oder koppelbar sind.

6. Fahrzeugsitz (100) nach einem der Ansprüche 2 bis 5,
**dadurch gekennzeichnet, dass** das Steuermodul (122) eine Kopplungsausnehmung (122.2) umfasst, über welche das Steuermodul (122) mit dem Steckermodul (123) auf Mitnahme gekoppelt ist oder koppelbar ist.

7. Fahrzeugsitz (100) nach einem der Ansprüche 2 bis 6,
**dadurch gekennzeichnet, dass** das Steckermodul (123) einen Kopplungsvorsprung (123.4) umfasst, über welchen das Steckermodul (123) mit dem Steuermodul (122) auf Mitnahme gekoppelt ist oder koppelbar ist.

8. Fahrzeugsitz (100) nach einem der Ansprüche 2 bis 7,
**dadurch gekennzeichnet, dass** die erste Kopplung (134) durch einen oder durch den Kopplungsvorsprung (123.4), der in eine oder in die Kopplungsausnehmung (122.2) eingreift, gebildet ist.

9. Fahrzeugsitz (100) nach einem der Ansprüche 2 bis 8,
**dadurch gekennzeichnet, dass** die Antriebseinheit (120) und das Steuermodul (122) über die zweite Kopplung (136) auf Mitnahme miteinander gekoppelt sind oder koppelbar sind.

10. Fahrzeugsitz (100) nach einem der Ansprüche 2 bis 9,
**dadurch gekennzeichnet, dass** im ausgebauten Zustand des Fahrzeugsitzes (100) die Antriebseinheit (120) durch die zweite Kopplung (136) in die angehobene Position (200) stellbar oder gestellt ist und in der angehobenen Position (200) gehalten oder haltbar ist und optional gegen ein Absenken gesperrt ist.

11. Fahrzeugsitz (100) nach einem der Ansprüche 2 bis 10,
**dadurch gekennzeichnet, dass** die zweite Kopplung (136) als ein festes Koppelelement (136.2) ausgebildet ist.

12. Fahrzeugsitz (100) nach einem der Ansprüche 2 bis 11,
**dadurch gekennzeichnet, dass** die zweite Kopplung (136) einerseits an dem Steuermodul (122) und andererseits an der Antriebseinheit (120) angelenkt ist.

13. Fahrzeugsitz (100) nach einem der Ansprüche 2 bis 12,
**dadurch gekennzeichnet, dass** die zweite Kopplung (136) an einem Exzenter (120.1) der Antriebseinheit (120) angelenkt ist.

14. Fahrzeugsitz (100) nach einem der Ansprüche 2 bis 13,
**dadurch gekennzeichnet, dass** die zweite Kopplung (136) als eine Zugkopplung und/oder Druckkopplung ausgebildet ist.

15. Fahrzeugsitz (100) nach einem der Ansprüche 2 bis 14,
**dadurch gekennzeichnet, dass** die zweite Kopplung (136) als eine Zugstange und/oder Druckstange ausgebildet ist.
